# FASCICULE DE BREVET EUROPEEN

(11) **EP 2 997 399 B1**
(45) Date de publication et mention de la délivrance du brevet: **05.04.2017**
(21) Numéro de dépôt: 14729961.4
(22) Date de dépôt: 15.05.2014
(51) Int. Cl.: G01T 1/29

(54) **DETECTEUR DE RAYONS X**
RÖNTGENDETEKTOR
X-RAY DETECTOR

(30) Priorité: 15.05.2013 FR 1354339
(43) Date de publication de la demande: 23.03.2016
(73) Titulaire: Centre National de la Recherche Scientifique (C.N.R.S.), 75794 Paris Cedex 16 (FR); Université Joseph Fourier, 38041 Grenoble Cedex 9 (FR)
(72) Inventeur: ARNOUD, Yannick, F-38120 Saint Egreve (FR); GUILLAUDIN, Olivier, F-38640 Claix (FR)
(74) Mandataire: Thibon, Laurent
(86) Numéro de dépôt international: PCT/FR2014/051132
(87) Numéro de publication internationale: WO 2014/184496

(56) Documents cités:
- DE-A1-102011 018 714
- FR-A1- 2 974 186
- US-A1- 2007 075 252
- US-A1- 2013 009 267

## Description

La présente demande de brevet revendique la priorité de la demande de brevet français FR13/54339 qui sera considérée comme faisant partie intégrante de la présente description.

### Domaine de l'invention

La présente invention concerne un dispositif de mesure des caractéristiques d'un faisceau de rayons X et plus particulièrement un tel dispositif adapté à être utilisé en relation avec des installations de radiothérapie.

### Exposé de l'art antérieur

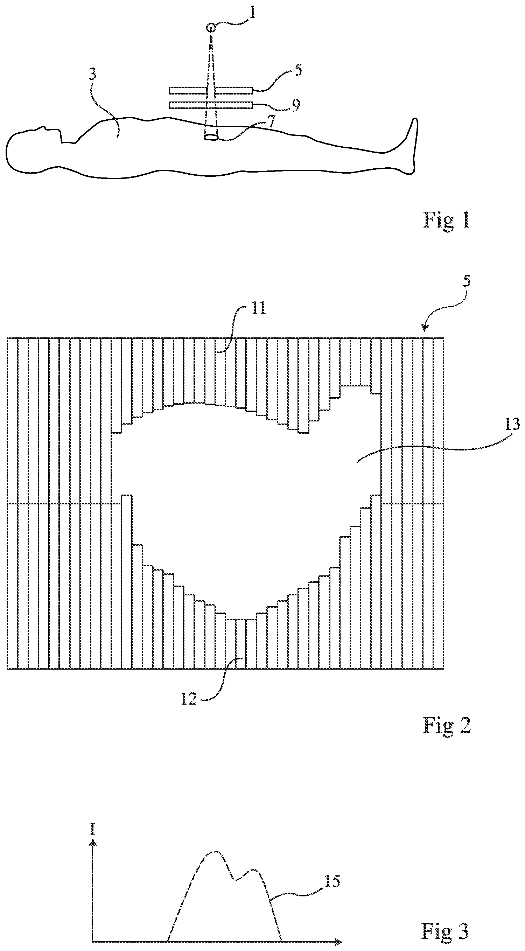

Une installation de radiothérapie va être décrite en relation avec les figures 1 à 3.

Comme l'illustre la figure 1, une telle installation comprend une source de rayons X 1 envoyant vers un patient 3 un faisceau de rayons X. Un diaphragme ou collimateur 5 permet de délimiter le faisceau de rayons X arrivant sur le patient à une zone correspondant à un organe 7 que l'on veut irradier.

La figure 2 représente en vue de dessus un exemple de collimateur 5. Il s'agit d'un collimateur à lames destiné à adapter la forme du faisceau de rayons X à celle de l'organe 7 que l'on souhaite irradier. Des lames en vis-à-vis 11 et 12 du collimateur à lames 5 sont positionnées pour laisser au centre de ce collimateur une ouverture 13 dont la forme est homothétique de celle de l'organe 7 à irradier.

De plus, on prévoit souvent un mouvement de tout ou partie des lames ou de l'ensemble du diaphragme au cours d'une séance d'irradiation, de sorte que, pendant des durées choisies, certaines parties de l'organe à irradier soient irradiées avec plus d'intensité que d'autres. On a représenté par une courbe 15 l'irradiation totale I que l'on peut ainsi obtenir en chaque emplacement de l'organe.

De telles installations d'irradiation sont sujettes à des défaillances qui peuvent avoir des conséquences dramatiques sur le traitement d'un patient. Ou bien les doses appliquées sont insuffisantes et le traitement est inopérant. Ou bien la densité d'irradiation fournie par erreur dans d'autres organes peut entraîner leur radio-sensibilisation, pouvant induire des cancers à déclenchement retardé.

C'est pourquoi on a prévu dans certaines installations récentes, derrière le collimateur, un détecteur d'irradiation tel que celui représenté schématiquement et désigné par la référence 9 en figure 1. Ce détecteur absorbe une petite partie seulement du faisceau de rayons X qui le traverse et permet de suivre la répartition spatiale de l'intensité de l'irradiation au cours d'une séance de radiothérapie.

Le document DE 10 2011 018714 constitue un exemple d'une telle installation.

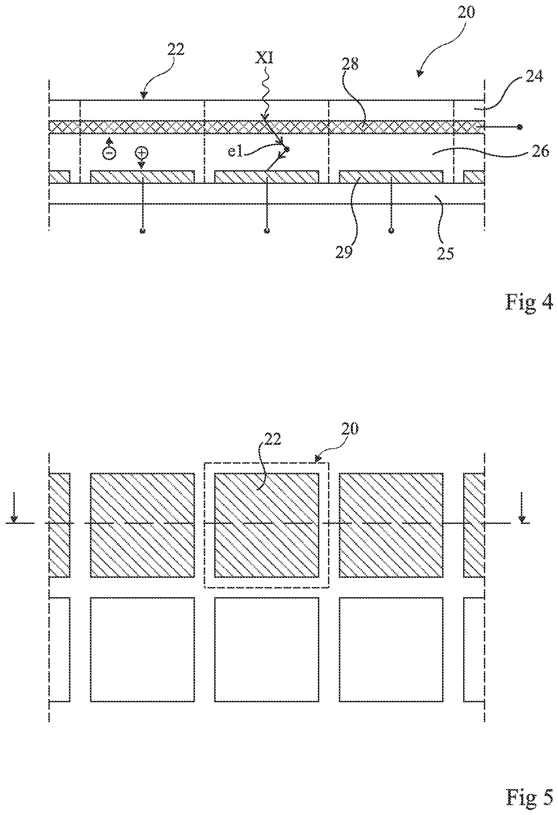

La figure 4 est une vue en coupe d'une partie d'un exemple de détecteur de rayons X, utilisable en radiothérapie. Dans cette figure, les lignes verticales en pointillés figurent le volume d'une cellule, et l'ensemble des cellules permet une couverture intégrale sans zone morte. La figure 5 est une vue de dessus de la plaque inférieure de ce détecteur. Ce détecteur 20 contient un grand nombre de cellules 22 de détection de rayons X. Les cellules ont toutes la même taille et sont juxtaposées matriciellement, sans zone morte. Chaque cellule 22 comprend, entre une plaque ou feuille supérieure 24 et une plaque ou feuille inférieure 25, une chambre d'ionisation 26 remplie d'un gaz, éventuellement simplement de l'air à une pression adaptée. Une électrode supérieure 28 formée sur la face interne de la plaque supérieure 24 est commune à toutes les cellules et est connectée en fonctionnement à un générateur de tension externe, qui assure une différence de potentiel par rapport à des électrodes inférieures. L'électrode supérieure 28 peut aussi être une grille métallique, perméable au gaz et présentant une grande transparence. Dans ce cas, il n'y a bien entendu pas de plaque supérieure 24. Une électrode inférieure 29 formée sur la face interne de la plaque inférieure 24 est propre à chaque cellule et est connectée en fonctionnement le plus souvent à une masse virtuelle (potentiel nul), imposée par les circuits électroniques de détection. Une différence de potentiel positive ou négative est ainsi présente entre l'électrode supérieure et les électrodes inférieures, selon les applications recherchées.

Le fonctionnement de ce détecteur va maintenant être décrit.

On considère un photon X, X1, arrivant sur la surface supérieure d'une cellule 22. Au niveau de la plaque 24, de l'électrode 26, ou d'une couche supplémentaire non représentée, le photon X1 est susceptible d'interagir et de fournir un électron rapide, de forte énergie cinétique, e1, qui pénètre dans la chambre d'ionisation. L'électron e1 est susceptible d'interagir avec une molécule du gaz contenu dans la chambre, par exemple une molécule d'azote pour fournir du diazote chargé positivement N₂⁺. Contrairement à l'électron e1, ce diazote chargé aura une faible énergie cinétique et est donc susceptible d'être attiré par l'électrode inférieure 29. L'électron rapide e1 continue sa course, éventuellement après avoir été dévié, et pourra ioniser une autre molécule. A la fin de sa course, l'électron e1, même s'il arrive sur une électrode, ne sera pas détecté car il fournirait une impulsion trop brève en regard des vitesses de lecture des circuits de détection courants.

Quel que soit l'emplacement dans le volume du détecteur où les molécules chargées sont créées, elles fourniront un signal qui sera recueilli par influence lors de leur déplacement sur au moins une électrode de type 29. On assure ainsi un contrôle complet de l'intégralité du faisceau de rayons X, sans qu'une non-conformité puisse passer inaperçue.

Ce qui précède ne constitue qu'un exemple des diverses interactions possibles. De façon connue, le photon X1, au lieu de fournir un électron rapide e1 pourrait fournir une paire d'un électron et d'un positron. Également, au lieu d'interagir avec une molécule d'azote pour fournir du diazote chargé positivement, l'électron e1 pourrait interagir avec une molécule d'oxygène pour fournir du dioxygène chargé positivement. Il pourra aussi se former des particules intermédiaires. De plus, de façon générale, l'interaction d'un électron rapide avec une molécule ne fournira pas seulement une molécule chargée mais aussi un électron de faible énergie cinétique qui pourra également être détecté, après un attachement éventuel à une molécule neutre, formant par exemple un dioxygène négatif.

Dans un détecteur contenant un grand nombre de chambres d'ionisation, par exemple 100x100, si on veut relier individuellement chaque électrode inférieure 29 à un système électronique de lecture, il faudra prévoir 10000 pistes métalliques circulant sur la plaque inférieure 25. Or les procédés de fabrication actuels limitent la densité des pistes, et il sera nécessaire de répartir sur plusieurs étages ces pistes afin d'assurer une isolation galvanique adéquate. L'épaisseur effective de la partie inférieure 25 augmentera en conséquence et absorbera une partie du flux incident de rayons X, et donc réduira la transparence du détecteur dans son ensemble.

On pourra aussi utiliser un multiplexage de type ligne-colonne. On obtient un adressage matriciel en associant les métallisations en lignes et les métallisations en colonnes à deux multiplexeurs distincts. Un inconvénient de cette réalisation est que les cellules sont analysées au mieux ligne par ligne, ce qui augmente le temps de lecture.

Une autre solution consiste à combiner les deux solutions précédentes. On obtient alors un système cumulant les avantages, mais aussi les inconvénients, du multiplexage et des connexions individuelles.

L'épaisseur globale du détecteur dépend de l'épaisseur de la plaque ou grille supérieure, et de l'épaisseur de la plaque inférieure. C'est la plaque inférieure 25 qui est en général la plus épaisse. L'épaisseur et la transparence globale du détecteur sont indépendantes de son orientation haut-bas ou bas-haut par rapport au faisceau de photons X1. Pour garantir le plus d'interactions et fournir le plus de particules détectables, le détecteur peut être retourné, afin que les photons X1 traversent d'abord la partie la plus épaisse, générant plus d'électrons rapides e1. Le reste du fonctionnement du détecteur reste inchangé.

Il existe donc un besoin pour un détecteur de rayons X amélioré et particulièrement adapté à des installations de radiothérapie.

### Résumé

Ainsi, un mode de réalisation prévoit un dispositif matriciel de mesure des caractéristiques d'un faisceau de rayons X selon la revendication 1, comprenant un premier ensemble de cellules de détection ayant des dimensions différentes des cellules d'au moins un deuxième ensemble de cellules de détection, chaque cellule correspondant à une chambre d'ionisation comprenant une électrode de détection, les électrodes de détection de toutes les cellules ayant une même surface effective de collecte de charges.

Selon un mode de réalisation, le dispositif comprend trois ensembles de cellules de détection réparties dans une zone centrale, une zone intermédiaire et une zone périphérique.

Selon un mode de réalisation, la zone intermédiaire contient des cellules ayant une surface de quatre fois la surface des cellules de la zone centrale et la zone périphérique contient des cellules ayant une surface de neuf fois la surface des cellules de la zone centrale.

Selon un mode de réalisation, les électrodes de détection des plus grandes cellules ont une forme en treillis et les espaces délimités par chaque treillis sont occupés par des électrodes de référence connectées à un potentiel de référence.

Selon un mode de réalisation, le potentiel de référence est la masse et les électrodes de détection sont reliées, en fonctionnement, à une masse virtuelle.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente schématiquement une installation d'irradiation utilisée en radiothérapie ;
la figure 2, décrite précédemment, est une vue de dessus d'un collimateur à lames ;
la figure 3, décrite précédemment, est une courbe représentant l'irradiation souhaitée d'un organe pendant une séance de radiothérapie ;
la figure 4, décrite précédemment, est une vue en coupe de quelques cellules adjacentes d'un détecteur matriciel de rayons X ;
la figure 5, décrite précédemment, est une vue de dessus de la plaque inférieure de quelques cellules adjacentes d'un détecteur matriciel de rayons X ;
la figure 6 est une vue de dessus d'un mode de réalisation d'un détecteur matriciel de rayons X ;
les figures 7A et 7B sont une vue en coupe et une vue de dessus d'un mode de réalisation d'une cellule élémentaire de surface quadruple ;
les figures 8A et 8B sont une vue en coupe et une vue de dessus d'un mode de réalisation d'une cellule élémentaire de surface nonuple ; et
la figure 9 est une vue de dessus d'un autre mode de réalisation d'un détecteur matriciel de rayons X.

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

### Description détaillée

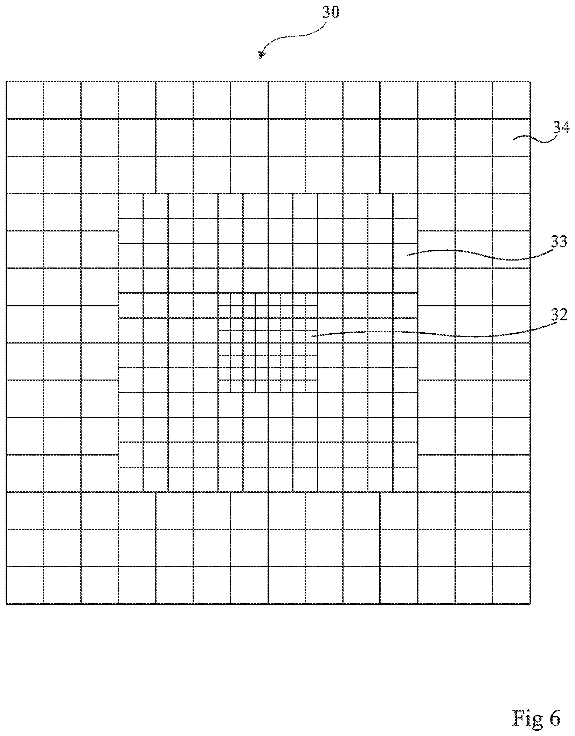

La figure 6 est une vue de dessus d'un mode de réalisation d'un détecteur matriciel de rayons X 30. Cette vue est extrêmement schématique et a seulement pour but d'illustrer la diversité des cellules du détecteur proposé. Le détecteur 30 comporte une zone centrale 32, une zone intermédiaire 33 et une zone périphérique 34 contenant chacune des cellules de détection. En vue de dessus, les cellules d'une même zone ont toutes la même taille et les cellules de zones différentes ont des tailles différentes.

Le détecteur 30 dans son ensemble a les mêmes dimensions que le détecteur 20 décrit précédemment mais comprend moins de cellules car certaines cellules sont plus grosses que les cellules d'une matrice régulière de détection. En effet, les inventeurs ont noté qu'en pratique, s'il était important d'avoir une indication sur la répartition de l'intensité des rayons X sur toute l'étendue du détecteur, c'est-à-dire sur toute l'étendue de la zone maximum irradiée sur un patient, il importe que cette mesure soit extrêmement précise dans une zone du détecteur qui correspond à une zone du collimateur à lames qui est pratiquement toujours ouverte, à savoir généralement le centre du collimateur. Par contre, en périphérie, on trouve des zones dans lesquelles le patient est moins susceptible d'être irradié. Il est alors moins important d'avoir une information aussi précise sur l'irradiation dans ces zones qui doivent néanmoins faire l'objet de mesures pour éviter tout risque d'accident.

Le fait de réduire le nombre de cellules réduit bien entendu le nombre de connexions vers ces cellules, que l'on opte pour un adressage par cellules ou pour un adressage utilisant des multiplexeurs et des regroupements en lignes et colonnes, comme on l'a exposé précédemment.

On propose ici non seulement d'adopter la structure matricielle à cellules de dimensions inégales telle que décrite en relation avec la figure 6, mais on propose également de modifier les cellules, de sorte que la surface de collecte correspondant aux électrodes inférieures de la figure 4 soit identique pour toutes les cellules. En effet, ceci permet d'utiliser des amplificateurs ou autres circuits tampons et de lecture de mêmes caractéristiques pour les différentes cellules. En l'absence de cette disposition, les cellules de plus grande dimension recevant une irradiation beaucoup plus importante que les cellules de plus faible dimension, il faudrait prévoir pour ces grandes cellules des amplificateurs ou autres circuits de détection présentant une dynamique beaucoup plus importante que celle des petites cellules. Dans l'exemple de la figure 6, dans lequel les cellules sont dans une relation surfacique de 1/4/9, les grandes cellules devraient être associées à des circuits d'amplification et/ou de détection de dynamique neuf fois plus importante que les petites. Ceci imposerait aux circuits de lecture des contraintes importantes.

Ainsi, on prévoit ici que toutes les cellules présentent une même surface de collecte de charges quelle que soit la dimension de la cellule. On pourra ainsi associer toutes les cellules à de mêmes circuits de détection ayant la même dynamique.

Dans un mode de réalisation du détecteur proposé ici, les cellules de plus petite dimension sont configurées comme les cellules décrites précédemment en relation avec les figures 4 et 5.

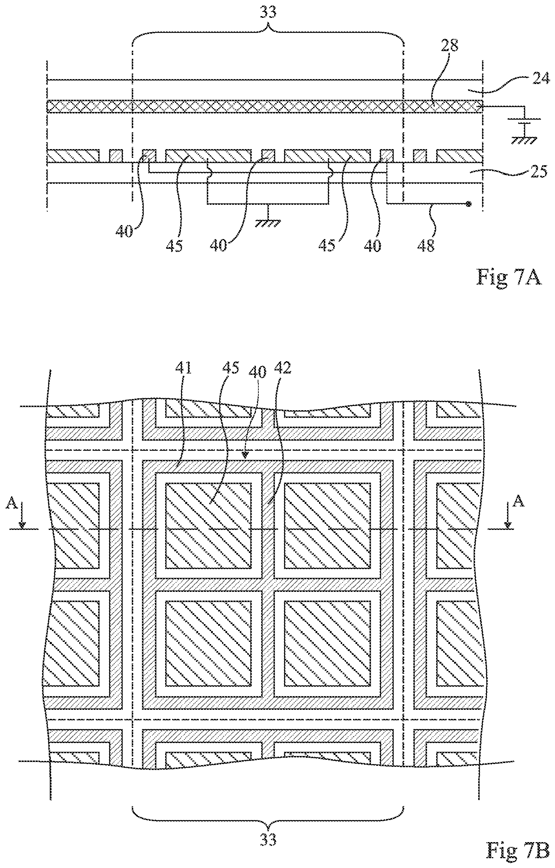

Les figures 7A et 7B représentent respectivement une vue en coupe, et une vue de dessus de la plaque inférieure, d'une cellule intermédiaire 33 de surface quatre fois plus importante que celle des cellules de plus petite dimension. On a désigné par la référence 24 la plaque isolante supérieure et par la référence 25 la plaque isolante inférieure. Comme dans les figures 4 et 5, la plaque isolante supérieure porte une électrode supérieure 28 commune à toutes les cellules. Sur la plaque isolante inférieure, sont formées pour chaque cellule 33 deux électrodes : une électrode de détection proprement dite désignée par la référence 40 et une électrode de référence désignée par la référence 45.

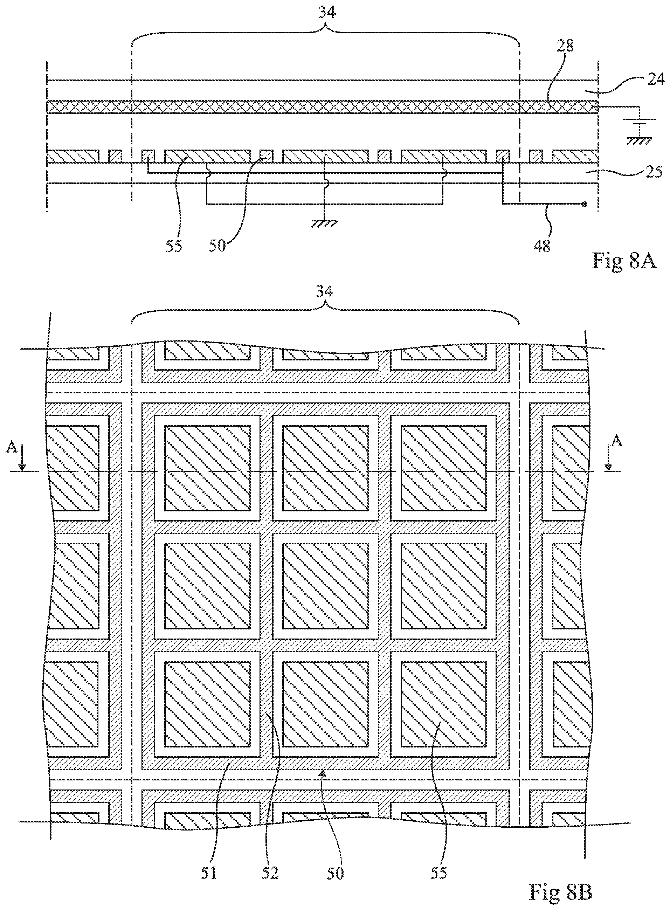

Comme l'illustre la vue de dessus de la plaque inférieure de la figure 7B, chaque électrode de détection 40 a une forme en treillis et comporte trois bandes horizontales équidistantes 41, reliées par trois bandes verticales équidistantes 42. Ainsi, l'électrode de référence correspond à quatre carrés insérés à l'intérieur du treillis constituant l'électrode de détection. Ces quatre carrés sont, comme cela est illustré en figure 8A, destinés à être reliés à la masse alors que l'électrode active est destinée à être reliée par une borne 48 à un système de détection (éventuellement via un multiplexeur). Le domaine d'influence d'une molécule chargée en déplacement est suffisamment important pour induire un signal sur une électrode de détection 40, même si elle est créée à l'aplomb d'une électrode de référence 45. Ceci assure une mesure complète et sans perte d'information pertinente des caractéristiques du faisceau de rayons X.

Le système de détection est choisi pour que la borne de sortie 48 soit connectée en fonctionnement à une masse virtuelle. Ainsi les deux électrodes, de détection et de référence, apparaissent, pour les charges créées dans la chambre d'ionisation, comme étant au même potentiel de référence (couramment la masse).

La surface totale de l'électrode de détection en treillis 40 est sensiblement égale à la surface de l'électrode de détection 29 (voir figure 4) de la cellule de plus petite dimension. En fait, la surface de l'électrode de détection 40 n'est pas strictement égale à la surface de l'électrode 29 de la figure 4. En effet, chaque électrode de détection détecte non seulement les charges qui la frappent directement mais aussi la moitié des charges qui frappent la zone neutre de la plaque inférieure entre chaque portion d'électrode de détection et la portion d'électrode de référence immédiatement voisine. Les électrodes de détection sont donc conçues pour avoir toutes une même "surface effective" de collecte de charges, en tenant compte de ce qui précède.

Les figures 8A et 8B représentent respectivement une vue en coupe, et une vue de dessus de la plaque inférieure, d'une cellule périphérique 34 de surface neuf fois plus importante que celle des cellules de plus petite dimension. Comme l'illustre la vue de dessus de la plaque inférieure de la figure 8B, chaque électrode de détection a une forme en treillis et comporte quatre bandes horizontales équidistantes 51, reliées par quatre bandes verticales équidistantes 52. Ainsi, l'électrode de référence 55 correspond à neuf carrés insérés à l'intérieur du treillis constituant l'électrode de détection 50. La surface effective de l'électrode de détection est égale à la surface effective de l'électrode 29 de la plus petite cellule décrite en relation avec la figure 4.

A titre d'exemple, les plus petites cellules pourront avoir des dimensions latérales de l'ordre de 1 à 5 mm, par exemple 3 x 3 mm². Dans ce cas, les cellules élémentaires auront une surface de 9 mm², les cellules de dimension quadruple auront une surface de 36 mm² et les cellules de dimension nonuple une surface de 81 mm².

Le détecteur pourra être fabriqué à partir de supports minces ou feuilles, par exemple des cartes de circuit imprimé souples. Les électrodes correspondent à des métallisations formées sur les feuilles. Des espaceurs peuvent être prévus pour assurer un espacement constant entre les plaques supérieure et inférieure.

Des modes de réalisation particuliers ont été décrits. Diverses variantes et modifications apparaîtront à l'homme de l'art. En particulier, on a décrit en détail un mode de réalisation dans lequel le détecteur comprend en son centre un premier ensemble de cellules de petites dimensions entouré d'un deuxième ensemble de cellules de dimensions quatre fois plus grande puis d'un troisième ensemble de cellules de dimensions neuf fois plus grandes. On pourra prévoir d'autres relations dimensionnelles entre les cellules, d'autres répartitions topologiques entre les diverses cellules, et d'autres nombres d'ensembles de cellules, par exemple seulement deux ou plus de trois.

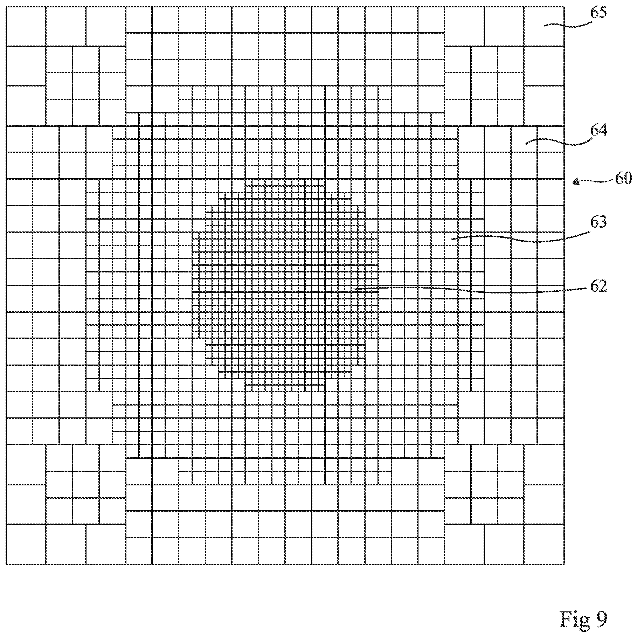

Ainsi, la figure 9 est une vue de dessus d'un autre mode de réalisation d'un détecteur matriciel de rayons X 60 dans lequel la répartition topologique des diverses cellules est distincte de celle de la figure 6. Le détecteur 60 comporte une zone centrale 62, une zone intermédiaire 63, une zone périphérique 64 et des zones de coin externes 65 contenant chacune des cellules de détection. En vue de dessus, les cellules d'une même zone ont toutes la même taille et les cellules de zones différentes ont des tailles différentes. Les différences essentielles avec les zones 32, 33, 34 de la figure 6 sont, d'une part, que les limites des zones 62, 63 et 64 sont définies par des polygones qui approximent des cercles, plutôt que d'être des carrés, d'autre part que des zones de coin 65 comprenant des cellules de plus grande taille ont été ajoutées.

De plus, on a décrit en détail un mode de réalisation dans lequel les plus petites cellules du détecteur ont la même dimension que les cellules d'un détecteur matriciel classique. On pourra prévoir que ces plus petites cellules sont plus petites que les cellules d'un détecteur matriciel classique.

Par ailleurs, on a décrit des formes particulières pour les électrodes de détection des plus grandes cellules. On comprendra que d'autres formes pourront être choisies du moment que les électrodes de détection des plus grandes cellules ont la même surface effective de collecte de charges que les plus petites cellules du détecteur.

D'autres dispositions de chambre d'ionisation peuvent être prévues. Notamment le choix de la plaque supérieure ou de la plaque inférieure pour porter les électrodes de détection est arbitraire.

## Revendications

1. Dispositif matriciel de mesure des caractéristiques d'un faisceau de rayons X, comprenant un premier ensemble (32) et au moins un deuxième ensemble (33 ; 34) de cellules de détection, **caractérisé en ce que** les cellules du premier ensemble ont des dimensions différentes des cellules dudit au moins un deuxième ensemble, chaque cellule correspondant à une chambre d'ionisation comprenant une électrode de détection, les électrodes de détection de toutes les cellules ayant une même surface effective de collecte de charges.

2. Dispositif selon la revendication 1, comprenant trois ensembles de cellules de détection réparties dans une zone centrale (32), une zone intermédiaire (33) et une zone périphérique (34).

3. Dispositif selon la revendication 2, dans lequel la zone intermédiaire contient des cellules ayant une surface de quatre fois la surface des cellules de la zone centrale et la zone périphérique contient des cellules ayant une surface de neuf fois la surface des cellules de la zone centrale.

4. Dispositif selon l'une quelconque des revendications 1 à 3, dans lequel les électrodes de détection (40 ; 50) des plus grandes cellules ont une forme en treillis et les espaces délimités par chaque treillis sont occupés par des électrodes de référence (45 ; 55) connectées à un potentiel de référence.

5. Dispositif selon la revendication 4, dans lequel le potentiel de référence est la masse et les électrodes de détection sont reliées, en fonctionnement, à une masse virtuelle.

## Patentansprüche

1. Matrixvorrichtung zum Messen der Eigenschaften eines Röntgenstrahls, die einen ersten Satz (32) und wenigstens einen zweiten Satz (33; 34) Detektionszellen aufweist, **dadurch gekennzeichnet, dass** die Zellen des ersten Satzes eine andere Größe besitzen als die Zellen des wenigstens einen zweiten Satzes, jede Zelle einer Ionisationskammer mit einer Detektionselektrode entspricht, und die Detektionselektroden aller Zellen einen gleich effektiven Ladungssammeloberflächenbereich besitzen.

2. Vorrichtung nach Anspruch 1, die drei Sätze Detektionszellen verteilt in einem Hauptbereich (32), einen Mittelbereich (33) und einen Randbereich (34) aufweist.

3. Vorrichtung nach Anspruch 2, wobei der Zwischenbereich Zellen enthält, die einen Oberflächenbereich besitzen, der viermal größer ist als der Oberflächenbereich der Zellen des Hauptbereichs und wobei der Randbereich Zellen enthält, die einen Oberflächenbereich besitzen, der neunmal größer ist als der Oberflächenbereich der Zellen des Hauptbereichs.

4. Vorrichtung nach einem der Ansprüche 1 bis 3, wobei die Detektionselektroden (40; 50) der größten Zelle eine Gitterform besitzen und die Räume, die durch jedes Gitter begrenzt sind, durch Referenzelektroden (45; 55), die mit einem Referenzpotential verbunden sind, besetzt sind.

5. Vorrichtung nach Anspruch 4, wobei das Referenzpotential Masse darstellt und die Detektionselektroden im Betrieb mit einer virtuellen Masse verbunden sind.

## Claims

1. A matrix device for measuring the characteristics of an X-ray beam, comprising a first set (32) and at least a second set (33; 34) of detection cells, **characterized in that** the cells of the first set have a different size than the cells of said at least one second set, each cell corresponding to an ionization chamber comprising a detection electrode, the detection electrodes of all cells having a same effective charge collection surface area.

2. The device of claim 1, comprising three sets of detection cells distributed in a central area (32), an intermediate area (33), and a peripheral area (34).

3. The device of claim 2, wherein the intermediate area contains cells having a surface area four times larger than the surface area of the cells of the central area and the peripheral area contains cells having a surface area nine times larger than the surface area of the cells of the central area.

4. The device of any of claims 1 to 3, wherein the detection electrodes (40; 50) of the largest cells have a lattice shape and the spaces delimited by each lattice are occupied by reference electrodes (45; 55) connected to a reference potential.

5. The device of claim 4, wherein the reference potential is the ground and the detection electrodes are connected, in operation, to a virtual ground.
